(19) Europäisches Patentamt
European Patent Office
Office européen des brevets

(11) **EP 2 156 737 A1**

(12) **EUROPEAN PATENT APPLICATION**
published in accordance with Art. 153(4) EPC

(43) Date of publication:
**24.02.2010 Bulletin 2010/08**

(51) Int Cl.:
*A01N 35/06* (2006.01)          *A01P 21/00* (2006.01)
*C05F 11/10* (2006.01)

(21) Application number: **08764852.3**

(22) Date of filing: **29.05.2008**

(86) International application number:
**PCT/JP2008/059883**

(87) International publication number:
**WO 2008/146873 (04.12.2008 Gazette 2008/49)**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **30.05.2007   JP 2007143797**

(71) Applicant: **Nisshin Pharma Inc.
Tokyo 101-8441 (JP)**

(72) Inventor: **SAITO, Yutaka
Fujimino-shi
Saitama 356-8511 (JP)**

(74) Representative: **Uchida, Kenji
Cabinet Fedit-Loriot
38, avenue Hoche
75008 Paris (FR)**

(54) **PLANT GROWTH PROMOTER**

(57)     A plant-growth promoting agent is provided, which is lower in environmental pollution, highly safe and harmless to human bodies, and which exhibits an excellent plant growth promoting action even under wide temperature conditions from low temperatures to high temperatures. And also the plant growth-promoting agent is provided, which has an ability to store ubiquinone, as an active ingredient of the plant-growth promoting agent, in a stable state and can be dispersed and stably present in a medium such as a soil or an aqueous liquid which supplies nutrition to the plant, especially in an initial stage in which a plant body is grown after germination.

**Description**

FIELD OF THE INVENTION

The present invention relates to a plant growth-promoter (hereinafter referred to as a plant growth-promoting agent), and particularly relates to a plant growth-promoting agent which is lower in environmental pollution and is harmless to human bodies. The present invention further relates to a plant growth-promoting agent which exhibits an excellent plant growth promoting action, even under wide temperature conditions from low temperatures to high temperatures. In detail, the present invention relates to a plant growth-promoting agent containing ubiquinone, and particularly relates to a plant growth-promoting agent which is effective in an initial stage in which a plant body is grown after germination.

BACKGROUND OF THE INVENTION

In the utilization of plants, including in agricultural production, it is always a concern for users of plants how efficiently a plant is grown. Growth promotion of plant bodies in an aerial part means to promote the formation of stems which are resistant to winds and rains and can accelerate development of leaves to promote photosynthesis. The growth promotion of roots can spread out the roots to support the aerial part of the plant such as stems, leaves, flowers and so on and allow the roots to absorb nutritional components in a wide range. In particular, growth promotion is extremely important in an early phase of growth.

Efforts to effectively grow plants have been made conventionally. For example, a method of utilizing an agricultural facility technology which controls temperature and light is available, but there are problems in that instruments and apparatuses for it are needed, much energy for controlling temperature and light is required and it is difficult to manage and maintain the instruments and the apparatuses.

Also, agricultural lands are treated with fertilizers. In this case, if fertilizers are excessively applied for plant growth, then a concentration disorder and root burn are caused, and the fertilizer flows out in the environment and remains in the soil for a long period of time, causing environmental pollution. In order to avoid those inconveniences, a fertilizer application pattern is performed such that the fertilizer in a predetermined amount is applied previously to the soil at an appropriate depth, and the fertilizer is utilized as the roots reach that depth. Also, a fertilizer application of nitric acid-based nitrogen in an appropriate amount is also conducted. However, even if such an effort is made, soil conditions such as pH and distribution of soil microorganisms in the soil greatly change, which often causes injury by continuous cropping. When injury by continuous cropping occurs, it is necessary to stop cultivation for a certain period to recover a soil environment, or to rotate the crop to another plant.

In methods of using substances having the action of promoting plant growth, e.g., plant hormone preparations such as ethylene, gibberellin and auxin, and activators of a particular enzyme in the plant body, problems described above are reduced because the amount to be used is relatively small. However, many problems remain, e.g., the concentration disorder for plants, safety for the environment, especially for animals or plants other than the target plants, safety for the human body, soil pollution, change in soil pH, simplicity of procedure, or utilization and costs.

Thus, it is required that the development of a plant growth-promoting agent in which those problems have been solved. In particular, it is required that the development of a plant growth-promoting agent which is highly effective in the initial growth of a plant, hardly causes a concentration disorder, can be utilized simply, and is highly safe. It is also required that the development of a plant growth-promoting agent which is effective under a harsh condition for plant growth, e.g., under low temperatures or high temperatures.

It is important to grow to give healthy seedlings after seeding plant seeds, and it is advantageous to shorten the period of time from the seeding to raising of the seedlings. During that period, if the control of temperature conditions is unnecessary, this is more advantageous. For example, it is reported that hydrolyzed polysaccharide obtained from *Malveles* plant is used as a germination promoting agent (Patent Document 1), but the effects obtained from the technology are not satisfied sufficiently.

In the current technology, no technology which satisfies all of the above-explained matters and conditions is yet known. That is, it has been desired to provide a plant growth-promoting agent which is effective in the period from the seeding plant seeds to the raising of the seedlings and in an early stage from settled planting to being grown to a predetermined size. Further, it has been desired to provide a plant growth-promoting agent which satisfies the above-explained matters and conditions, and promotes an extension of a root.

Ubiquinone, which is referred to as coenzyme Q or co-enzyme Q, is the coenzyme involved in an energy metabolism system in living bodies. In ubiquinone, molecular species of coenzyme Q6 to coenzyme Q12 are present, depending on an isoprene unit number in its molecule. Coenzyme Q7 and coenzyme Q8 are mainly distributed in plants and bacteria. Coenzyme Q9 is mainly distributed in rodents, such as rats, and coenzyme Q10 is mainly distributed in human beings. Ubiquinone not only has a biological activity as a coenzyme but also is thought to have effects such as anti-oxidation and stabilization of a biological membrane. Clinically, coenzyme Q10 has been observed to have pharmacological effects in improvements in symptoms in angina, cardiac failure, ischemic cardiac disease and muscular dystrophy and the like.

Ubiquinone has high safety, and in particular, coenzyme Q 10 has been not only used as pharmaceuticals, but also as health foods, especially as health foods with other substances. However, the actions of coenzyme Q9 and coenzyme Q10 upon plants are not well known. For example, in Patent Document 2, it has been reported that a solution in which coenzyme Q7 as ubiquinone and α-tocopherol have been mixed in equal moles augments the biological activity in the plant, but it is necessary that ubiquinone and α-tocopherol are balanced at a certain concentration, and it has not been known whether ubiquinone alone can be used as the plant growth-promoting agent because the confirmed effects therein are those concerning preservation of cut flowers. In Patent Document 3, it has been reported that a substance obtained by making a metal or a metal compound contact with a solution containing coenzyme Q7 as ubiquinone and α-tocopherol mixed in equal moles is used as a plant organism consolidating agent. But it is necessary that ubiquinone and α-tocopherol are balanced at a certain concentration, and it is further necessary to elicit the action of ubiquinone and α-tocopherol through the metal or the metal compound. Further in Patent Document 4, it has been reported that the peroxide generated by a reaction of ubiquinone with active oxygen controls the growth of the plant. However, in actuality, the activity of the peroxidized ubiquinone is not identified, and peroxide exhibits toxicity in some cases, the preparation thereof requires a significant amount of effort and time, a storage stability thereof is low because peroxide is easily decomposed, and thus, this has many problems for use as the plant growth-promoting agent.

Patent Document 1: Japanese Published Unexamined Patent Application No. Hei-11-71218-A
Patent Document 2: Japanese Published Unexamined Patent Application No. Sho-48-13155-A
Patent Document 3: Japanese Published Unexamined Patent Application No. Sho-50-99864-A
Patent Document 4: Japanese Published Unexamined Patent Application No. Hei-6-305921-A

Disclosure of Invention

SUMMARY OF THE INVENTION

An object of the present invention is to provide a plant growth-promoting agent which is highly safe and harmless to a human body and to provide the plant growth-promoting agent which exhibits an excellent plant growth-promoting effect under wide temperature conditions from low temperatures to high temperatures. In detail, the object of the present invention is to provide the plant growth-promoting agent which can be stored in a stable state and can be dispersed and stably present in a medium such as a soil or an aqueous liquid which supplies nutrition to the plant (hereinafter, the soil or aqueous liquid will be sometimes referred to as a carrier) and can be effectively utilized for the plant and provide the plant growth-promoting agent which is effective in an early stage in plant growth.

During an extensive study for solving the above problems, the present inventor has found that ubiquinone at low concentrations surprisingly exhibits a growth-promoting action for various plants, and particularly has found that its effect is high in the early stage of plant growth. Further, the present inventor obtains a finding that ubiquinone surprisingly exhibits the excellent plant growth-promoting action even under a harsh condition for plant growth, e.g., under low temperatures and high temperatures. The present inventor has achieved the present invention.

That is, the present invention is as follows.

A first aspect of the invention is a plant growth-promoting agent containing ubiquinone as an active ingredient.

A second aspect of the invention is the invention wherein ubiquinone according to claim 1 is coenzyme Q9 and/or coenzyme Q10.

A third aspect of the invention is the invention wherein ubiquinone according to claim 1 or 2 is a water-solubilized ubiquinone.

A fourth aspect of the invention is the invention that is characterized in that a water-solubilized ubiquinone in an amount of 0.00001 to 100% by mass based on the plant growth-promoting agent is contained in the plant growth-promoting agent according to claim 3.

A fifth aspect of the invention is a fertilizer containing the plant growth-promoting agent according to any one of claims 1 to 4.

A sixth aspect of the invention is a germination promoting agent containing the plant growth-promoting agent according to any one of claims 1 to 4.

DETAILED DISCRIPTION OF THE INVENTION

The present invention will be described in detail below.

The plant growth-promoting agent of the present invention contains ubiquinone as an active ingredient.

The ubiquinone includes coenzyme Q6, coenzyme Q7, coenzyme Q8, coenzyme Q9, coenzyme Q10, coenzyme Q11, and coenzyme Q12. The plant growth-promoting agent of the present invention also contains ubiquinol, reduced bodies of ubiquinone thereof, such as, reduced coenzyme Q6, reduced coenzyme Q7, reduced coenzyme Q8, reduced coenzyme Q9, reduced coenzyme Q10, reduced coenzyme Q11, and reduced coenzyme Q12. Among them, coenzyme Q9, coenzyme Q10, reduced coenzyme Q9, and reduced coenzyme Q10 are preferable. In particular, not substances produced by a so-called fermentation method but coenzyme Q9, coenzyme Q 10, reduced coenzyme Q9, and reduced coenzyme Q10 produced by a so-called synthesis method are preferable. Further, coenzyme Q10 and reduced coenzyme Q10 are preferable, and coenzyme Q10 and reduced coenzyme Q10 produced by the so-called synthesis method are more preferable.

The coenzyme Q10 and reduced coenzyme Q10 are advantageous because they have been identified to have high safety, they are not concentrated, accumulated and retained in the environment, and they have been approved for use as foods.

Ubiquinone used in the present invention may be used in a form of fine particles, but it is preferable to use water-solubilized ubiquinone. In particular, the plant growth-promoting agent prepared by using water-solubilized ubiquinone is advantageous because the following problems are solved.

Ubiquinone is a lipophilic solid with a low melting point, and is slightly dissolved in ether to some extent, but is hardly dissolved in water. Thus, ubiquinone in the form of large masses, is hardly utilized by plants. Furthermore, ubiquinone floats on water. Thus, ubiquinone suspends on a liquid surface in a flood, easily flows out with rainfall even when being spread on a soil surface, and if it is applied in the soil, the ubiquinone is directly accumulated without being used in the soil. If ubiquinone is made into the form of fine particles to be able to bind a carrier, etc, it is possible to hardly cause the problems described above.

The shape of the ubiquinone when used in the form of fine particles is not particularly limited, and can exemplify, for example, a spherical shape, a spherical shape like a football, a bar shape such as a cylindrical shape, a prismatic shape such as a square column shape, and a spherical shape having convex portions such as confetti. The size of those particles is not particularly limited, but is, for example, approximately 0.1 $\mu$m to 1 mm and preferably approximately 1 $\mu$m to 0.1 mm for obtaining the effects of the present invention. The method of preparing those particles is not particularly limited, and includes the method of molding ubiquinone itself by a standard method or the method of pulverizing or triturating large ubiquinone particles into fine particles.

The fine particles of ubiquinone are advantageous because these can be mixed with other fertilizers to be stably stored and can be directly applied as a fertilizer.

The water-solubilized ubiquinone refers to ubiquinone in the form in which ubiquinone can be emulsified, dispersed or suspended (hereinafter sometimes referred to as emulsification and dispersion) in an aqueous medium, and this form is not particularly limited. When the water-solubilized ubiquinone is added into the aqueous medium, ubiquinone can be dispersed or suspended in the aqueous medium and can exist stably in the aqueous medium. The aqueous medium includes, but is not limited to, water and lower alcohol such as ethanol.

The method of preparing the water-solubilized ubiquinone is not particularly limited, the publicly known method can be conducted, and specifically the following methods (1) to (5) can be exemplified.

(1) Composition described in Japanese Published Unexamined Patent Application No. 2004-196781-A
A coenzyme Q10-containing an aqueous liquid composition composed of (A) 5 to 40% by mass of coenzyme Q10, (B) 5 to 30% by mass of monoester of polyglycerine having an average polymerization degree of 10 and stearic acid, oleic acid or linoleic acid, (C) 1 to 18% by mass of mono-, di-, tri- or penta-ester of polyglycerine having an average polymerization degree of 3 to 6 and stearic acid, oleic acid or linoleic acid and (D) water is dispersed and emulsified using a high pressure homogenizer. Coenzyme Q10 is emulsified, dispersed or suspended.

(2) Composition described in International Publication WO2006/035900
An emulsified composition contains coenzyme Q10, middle chain triglyceride, a surfactant, polyvalent alcohol and water, wherein a ratio of the middle chain triglyceride is 1 to 10 parts by weight based on 10 parts by weight of coenzyme Q10 and a ratio of the water contained in 100% by weight of the composition is 10 to 40% by weight. Coenzyme Q10 is dispersed or solubilized in the water.

(3) Composition described in Japanese Published Unexamined Patent Application No. 2003-055203-A
Coenzyme Q10 is dispersed and emulsified in one or more water soluble substances selected from the group consisting of gum arabic, agar, water soluble corn fiber, starch, gelatin, xanthan gum, casein, dextrin, carmellose sodium and polyvinyl pyrrolidone in the presence of an organic acid. Coenzyme Q10 is emulsified, dispersed or suspended.

(4) Composition described in Japanese Published Unexamined Patent Application No. 2005-139122-A
A composition contains coenzyme Q10, dextrin, fatty acid ester and water, and 0.4 parts by weight or more of fatty acid ester is contained based on one part by weight of coenzyme Q10. Paste or liquid coenzyme Q10 is solubilized.

(5) Composition described in International Publication WO2006/022187
Coenzyme Q10 is melted in advance, and added to a water soluble substance composed of octenyl succinate starch and dextrin and an aqueous solution composed of glycerine, and the resulting mixture is dispersed and emulsified using the high pressure homogenizer. Coenzyme Q10 is emulsified, dispersed, or suspended.

The plant growth-promoting agent of the present invention can be easily prepared by using the ubiquinone. For example, the fine particles of the ubiquinone can be used directly as the plant growth-promoting agent, but it is preferable to adjust the content of the fine particles of ubiquinone by mixing an extender with the fine particles of ubiquinone.

It is preferable that the plant growth-promoting agent of the present invention be prepared using the above water-solubilized ubiquinone.
The form of the above water-solubilized ubiquinone is not particularly limited, and for example, a slurry form, a sol form, a paste form, a liquid form, and an emulsified form can be exemplified. These forms can be prepared by appropriately adopting a publicly known technology. In the state in which water-solubilized ubiquinone is emulsified and dispersed in the aqueous medium, an average particle diameter of the ubiquinone particles is 0.01 to 1000 $\mu$m and preferably 0.01 to 100 $\mu$m.

For example, water-solubilized ubiquinone can be used directly as the plant growth-promoting agent. Also additives such as a stabilizer, a carrier, and a diluent may be added to water-solubilized ubiquinone to use as the plant growth-promoting agent. Weight ratios of water-solubilized ubiquinone to the additives are not particularly limited. The appropriate weight ratio can be set depending on the intended use of the plant growth-promoting agent and the plant subjected to the plant growth-promoting agent.

The water-solubilized ubiquinone of the present invention includes water-solubilized ubiquinone in a solid form obtained from ubiquinone in the form of being emulsified and dispersed in an aqueous medium. The water-solubilized ubiquinone in the solid form obtained by removing the aqueous medium from ubiquinone in the form of being emulsified and dispersed in the aqueous medium is also included. Here, the solid form can include a powder form and a particle form. The water-solubilized ubiquinone in the solid form can be prepared from ubiquinone in the form of being emulsified and dispersed in the aqueous medium by the standard method.

Additives such as a stabilizer, a carrier and a diluents can be added to the water-solubilized ubiquinone in the form of being emulsified and dispersed in the aqueous medium, and the mixture can be mixed, granulated and dried to make the ubiquinone into a water-solubilized ubiquinone in the solid form. The additives can include, for example, sucrose, glucose, corn starch, calcium phosphate, lactose, sorbitol, dextrin, starch, crystalline cellulose, cyclodextrin and polyvinyl pyrrolidone.
The water-solubilized ubiquinone in the solid form can be directly used as the plant growth-promoting agent, but it is preferable to adjust the content of ubiquinone by combining an extender with the water-solubilized ubiquinone in the solid form. The plant growth-promoting agent prepared from the water-solubilized ubiquinone has a feature of being easily dissolved, emulsified or dispersed in the aqueous medium. The aqueous medium is suitably water, but is not limited thereto. The plant growth-promoting agent in the powder form or the particle form is advantageous because this can be directly applied as fertilizer or can be mixed with other fertilizers to be stably stored.

Coenzyme Q10 which is the water-solubilized ubiquinone in the form of being emulsified, dispersed or suspended (hereinafter sometimes referred to as water-solubilized coenzyme Q10) is commercially available, and this may be used. Water-solubilized coenzyme Q10 includes, for example, Aqua Q10-P5 (manufactured by Nisshin Pharma Inc.) and Aqua Q10-P40 (manufactured by Nisshin Pharma Inc.) as the solid form and Aqua Q10-L10 (manufactured by Nisshin Pharma Inc.) as the liquid form.

When the plant growth-promoting agent of the present invention is prepared from water-solubilized ubiquinone, in the case of the plant growth-promoting agent as a solid agent, generally it is preferable to prepare it so that the water-solubilized ubiquinone is contained in an amount of 0.01 to 100% by mass in the plant growth-promoting agent. Alternatively, it is preferable to prepare it so that the water-solubilized ubiquinone is contained in the amount of 100 to 1000000 ppm in the plant growth-promoting agent. In the case of the plant growth-promoting agent as a liquid agent, it is preferable to prepare it so that the water-solubilized ubiquinone is contained in the amount of 0.00001 to 60% by mass in the plant growth-promoting agent. Alternatively, it is preferable to prepare it so that the water-solubilized ubiquinone is contained in the amount of 0.1 to 600000 ppm in the plant growth-promoting agent.

When the plant growth-promoting agent of the present invention is applied to the plant, it is preferable to adjust this plant growth-promoting by appropriately diluting, emulsifying, dispersing, suspending or dissolving before use so that the concentration of ubiquinone is 0.01 to 1000 ppm, preferably 0.1 to 500 ppm and more preferably 0.5 to 100 ppm. When the plant growth-promoting agent is adjusted so that the concentration of water-solubilized ubiquinone is 0.1 to 100 ppm, this plant growth-promoting agent can be directly applied to the plant.

The plant growth-promoting agent can be used by mixing or combining with another plant growth-promoting agent, the germination promoting agent, a root stimulator, a lodgeing (stem-falling on a ground) diminishing agent or the like. Examples of such chemicals include ethephon, auxin, gibberellin, naphthyl acetamide, calcium prohexadione and paclobutrazol.

The plant growth-promoting agent of the present invention can be combined with so-called fertilizer. Its combined amount cannot be defined categorically because the amount varies depending on composed materials, the nature and the intended use of the fertilizer, but, for example, the plant growth-promoting agent of the present invention in the amount of 0.01 to 10% by mass can be mixed in the fertilizer. The method of producing this fertilizer containing the plant growth-promoting agent is not particularly limited. The method of using this fertilizer is not also particularly limited.

The plant growth-promoting agent of the present invention has the function of promoting the growth of a plant body, and promotes growth in not only the aerial part but also the root which is an underground part of the plant.

The plant growth-promoting agent of the present invention can be applied to plants in general. Among them, when the plant growth-promoting agent of the present invention is applied to so-called spermatophytes, for example, the spermatophytes which live in paddy fields, fields and hills and dales, it exerts excellent growth-promoting effects. Preferable examples of the spermatophytes include, but are not limited to, *Rosaceae* plants such as apples and cherries, *Liliaceae* plants such as green onions and chives, *Fagaceae* plants, *Brassicaceae* plants such as rapes, Japanese horseradish, horseradish, cauliflowers, cabbages, qing-geng-cai, celery cabbages, komatsuna greens, turnips and Japanese radish, *Malvaceae* plants such as angled loofah, *Stachyuraceae* plants, *Oxalidaceae* plants, *Saxifragaceae* plants, *Solanaceae* plants such as potatoes, tomatoes and capsicum, *Lamiaceae* plants such as perilla and mint, *Cucurbitaceae* plants such as cucumbers, *Gentianaceae* plants, *Asteraceae* plants such as sunflowers, lettuces, crown daisies and burdocks, *Apiaceae* plants such as carrots, parsleys and celeries, *Aguifoliaceae* plants, *Cornaceae* plants, *Ericaceae* plants, *Santalaceae* plants, *Polygonaceae* plants such as buckwheat, *Chenopadiaceae* plants such as spinach, *Caryophyllaceae* plants, *Buxacese* plants, *Orchidaceae* plants such as vanilla, *Fabaceae* plants such as soybeans, peas, faba beans and snow peas, *Poaceae* plants such as rice, wheat and maize, *Rubiaceae* plants such as coffee, *Euphorbiaceae* plants such as ricinus and cassava, *Melastomataceae* plants, *Myrtaceae* plants, *Apocynaceae* plants, *Cyperaceae* plants such as papyrus, *Araceae* plants such as dasheens, *Gesneriaceae* plants, *Acanthaceae* plants, *Boraginaceae* plants, *Urticaeae* plants, *Ranunculaceae* plants and *Lauraceae* plants such as avocados. The plant growth-promoting agent of the present invention can also be applied to plants such as Pteridophytes and Bryophytes, and further mushrooms.

The plant growth-promoting agent of the present invention can be used suitably for sprouts of broccolis, mustards, cresses, tiny cabbages, red cabbages, radish sprouts, Japanese radishes, soybean sprouts, green bean sprouts, pea sprouts, buckwheat, alfalfas, sprouted brown rice and the like because the plant growth-promoting agent is excellent in growth-promoting effect in the early phase of plant growth.

It is particularly effective to use the plant growth-promoting agent in the period from the seeding of seeds to the raising of the seedlings or a predetermined period from the settled planting of breeding plants, i.e. an early phase of plant-growth from the settled planting of breeding plants. It is difficult for plants to grow and extend roots sufficiently to absorb nutrition in the period from the germination to early growth or under a disadvantageous condition for the growth, e.g., under high temperatures or low temperatures.

And the plant growth-promoting agent of the present invention exhibits remarkable growth-promoting effects on the entire plant including the roots. Ubiquinone is a lipid-soluble substance, thus can be absorbed from the plant body other than the roots, and thus is extremely effective. The early stage of plant growth or the early phase of plant growth varies depending on the kind, the cultivation method and the cultivation condition of the plant to be applied, but is generally within 3 months from germination. The harsh conditions for plant growth vary depending on various conditions, and generally includes the temperature condition which is more than 5°C higher or lower than an optimal temperature for cultivation of a plant.

A use form of the plant growth-promoting agent of the present invention is not particularly limited. The use form used in the art can be appropriately adopted. For example, the plant growth-promoting agent of the present invention can be contained in the carrier for plant cultivation. Here, the carrier for plant cultivation refers to the soil, a medium or water in hydroponics. That is, it can be exemplified to disperse the plant growth-promoting agent of the present invention in the soil, contain the plant growth-promoting agent of the present invention in the medium or add the plant growth-promoting agent of the present invention in the water for hydroponics. The plant growth-promoting agent of the present invention may be sprayed or scattered to the plant body. The seeds of the plant and the roots of the plant seedling or a portion of the seedling including the roots may be immersed in the plant growth-promoting agent of the present invention or the liquid containing the plant growth-promoting agent of the present invention. The use forms of the plant growth-promoting agent of the present invention are not limited thereto.

Effects of the Invention

The plant growth-promoting agent of the present invention exerts extremely excellent effects that not only is the growth of the aerial parts of the plant bodies such as stems, leaves, flowers and so on promoted, but the growth of the underground parts such as roots is also promoted, at a low concentration and with no concentration disorder. The plant growth-promoting agent of the present invention can be prepared without requiring a significant amount of effort and time, is lower in environmental pollution, is highly safe, and is harmless to the human body. Thus, the plant growth-promoting agent of the present invention can be used for not only ordinary fields and rice paddies, but also for multi-cultivation, facility cultivation, hydroponic cultivation, and crop rotation farms. The plant growth-promoting agent of the present invention has the germination promoting action, and thus is also a germination promoting agent.

EXAMPLES

The present invention will be more specifically described below with examples, but the present invention is not limited thereto.

(Example 1) Preparation of plant growth-promoting agent

First, 1.25 g of water-solubilized coenzyme Q10 (Aqua Q10-P40 containing coenzyme Q10 in an amount of 40% by mass manufactured by Nisshin Pharma Inc.) was diluted using 500 ml of city water to prepare a solution of 1000 ppm of coenzyme Q10. This was diluted with city water to prepare a growth-promoting agent in a solubilized form containing coenzyme Q10 (sometimes described as CoQ10) in the amount of 10 ppm or 100 ppm.

(Growth promotion effect test I of water-solubilized coenzyme Q 10)

A Kimtowel was matted on a petri dish, 100 mL of a growth-promoting agent in Example 1 was poured thereon, and 20 seeds of radish sprouts (produced by Noguchi Seed and Seedling Laboratory) were placed thereon. This petri dish was stored at room temperature under a light shielding condition. After 7 days, the sprouts were collected, and a total length and a root length of the radish sprouts were measured.
The results are shown in Table 1. Data as the control was a result obtained by measuring the total length of the plant in the same way as described above, except that city water was used in place of the growth - promoting agent (date as the control described below was a result obtained by the same way described above).
Table 1

| | Concentration of CoQ10 | Total length | | Measured value of root (cm) |
|---|---|---|---|---|
| | | Measured value (cm) | Growth rate (%) | |
| Control | | 10.0 | | 2.2 |
| Example 1 | 10 ppm | 12.4 | 24.0 | 3.5 |
| Example 1 | 100 ppm | 11.1 | 11.0 | 2.8 |

Numerical values in the Table represent a mean of measured values unless otherwise explained (Numerical values in the Table described below represent the same described above).
A growth rate was calculated based on the following formula (Numerical A growth rate was calculated by the same way described above):

$$[(A-B)/B]\times100,$$

wherein A denotes a measured value of the total length of the plant cultivated in the presence of the growth- promoting agent containing coenzyme Q10, and B denotes a measured value of the total length of the plant as the control plant.
From the results in Table 1, it has been found that the plant growth-promoting agent of the present invention very strongly promotes plant growth in the germination phase. This plant growth promoting effect was observed in not only stems but also roots. Thus, it has been found that the plant growth-promoting agent of the present invention has the action to promote growth efficiently in the entire plant. Even at a high concentration of 100 ppm of coenzyme Q10, the plant growth-promoting agent of the present invention had the growth promoting action without causing a concentration disorder. Further, coenzyme Q10 was not precipitated.

(Example 2) Preparation of growth-promoting agent

First, 5 g of water-solubilized coenzyme Q10 (Aqua Q10-L10 containing coenzyme Q10 in an amount of 10% by mass manufactured by Nisshin Pharma Inc.) was diluted using 500 ml of city water to prepare a solution of 1000 ppm coenzyme Q10. This was diluted with city water to prepare a growth-promoting agent in the solubilized form containing coenzyme Q10 in the amount of 1 ppm.

(Growth promotion effect test II under high temperature condition)

A Kimtowel was matted on a petri dish, 100 mL of the growth-promoting agent in Example 2 was poured thereon, and 20 seeds of radish sprouts (produced by Noguchi Seed and Seedling Laboratory) were placed thereon. This petri dish was stored at 35°C under the light shielding condition. After 8 days, the sprouts were collected, and the total length and the root length of the radish sprouts were measured. A number of germinated seeds was counted.
The results are shown in Table 2.

(Comparative Example 1)

The test was manipulated in the same way as above, except that a comparative growth-promoting agent obtained by removing only coenzyme Q10 from the growth-promoting agent in Example 2 was used in place of the growth-promoting agent. The total length and the root length of the radish sprouts collected after 8 days were measured. The number of germinated seeds was counted.
The results are shown in Table 2.
Table 2

| | Concentration of CoQ10 | Total length | | Measured value of root (cm) | Germination rate (%) |
|---|---|---|---|---|---|
| | | Measured value (cm) | Growth rate (%) | | |
| Control | | 1.9 | | 0.5 | 20 |
| Comparative Example 1 | 0 ppm | 1.2 | | 0.5 | 15 |
| Example 2 | 1 ppm | 4.1 | 115.8 | 0.9 | 75 |

Numerical values in the total length and root columns in the Table represent a mean of respective measured values of the radish sprouts. The numerical values in the germination rate column in the Table represent a percentage of germinated seeds in the seeds placed on the petri dish.

(Example 3) Preparation of growth-promoting agent

A growth-promoting agent in the solubilized form containing coenzyme Q10 in the amount of 1 ppm was prepared in the same manipulation as Example 1.

(Growth promotion effect test III under low temperature condition)

A Kimtowel was matted on a petri dish, 100 mL of the growth-promoting agent in Example 3 was poured thereon, and 20 seeds of radish sprouts (produced by Noguchi Seed and Seedling Laboratory) were placed thereon. This petri dish was stored at room temperature under the light shielding condition for 3 days to germinate, and then stored at 15°C under the light shielding condition. After 4 days, the sprouts were collected, and the total length and the root length of the radish sprouts were measured.
The results are shown in Table 3.

(Comparative Example 2)

The test was manipulated in the same way as above, except that a comparative growth-promoting agent obtained by removing only coenzyme Q10 from the growth-promoting agent in Example 3 was used in place of the growth-promoting agent. The total length and the root length of the radish sprouts collected were measured.
The results are shown in Table 3.
Table 3

| | Concentration of CoQ10 | Total length | | Measured value of root (cm) |
|---|---|---|---|---|
| | | Measured value (cm) | Growth rate (%) | |
| Control | | 8.0 | | 1.1 |
| Comparative Example 2 | 0 ppm | 8.8 | | 1.3 |
| Example 3 | 1 ppm | 10.9 | 36.3 | 2.4 |

It has been found that the plant growth-promoting agent containing ubiquinone of the present invention very strongly promotes plant growth as well as promotes the germination even under a harsh environment such as the high temperature load condition in Example 2 and the low temperature load condition in Example 3. And it has been also found that the plant growth-promoting agent of the present invention efficiently promotes the growth of the entire plant including the stem and the root as is the case with Example 1. It has also been found that the above actions are exerted by virtue of ubiquinone because no effect was observed in Comparative Examples in which the concentration of coenzyme Q10 was 0 ppm.

(Examples 4 to 7)

(Growth promotion effect test IV of water-solubilized coenzyme Q 10)

A required number of petri dishes were prepared, the Kimtowel was matted on the each petri dish, 100 mL of the growth-promoting agent in Example 3 was poured thereon, and 40 seeds (produced by Noguchi Seed and Seedling Laboratory) of the plants described in Table 4 were placed thereon. These petri dishes were stored at room temperature under the light shielding condition. After 7 days, sprouts were collected, and the total length of the plants described in Table 4 was measured.
The results are shown in Table 4.
Table 4

| Example | Plant | Measured value (cm) | | Growth increase rate (%) |
|---|---|---|---|---|
| | | CoQ10 | Control | |
| Example 4 | Komatsuna | 8.87 | 7.67 | 15.6 |
| Example 5 | Crown daisy | 5.46 | 4.63 | 17.9 |
| Example 6 | Burdock | 4.96 | 4.40 | 12.7 |
| Example 7 | Spinach | 4.22 | 3.82 | 10.5 |

The growth rate was calculated based on the following formula (A growth rate was calculated by the same way described above ):

$$[(A-B)/B]\times100,$$

wherein A denotes a measured value of the total length of the plant cultivated in the presence of the growth-promoting agent containing CoQ10, and B denotes the measured value of the total length of the plant as the control.

(Examples 8 to 12)

(Growth promotion effect test V of water-solubilized coenzyme Q 10)

The required number of petri dishes was prepared, and the growth-promoting effect on seeds (produced by Noguchi Seed and Seedling Laboratory) of the plants described in Table 5 was examined in the same way as in Growth promotion effect test IV of water-solubilized coenzyme Q10. The measurement results of the total length of each plant are shown in Table 5.

30 seeds of wheat were examined. Buckwheat and snow peas were stored at room temperature under the light shielding condition, and collected after 8 days. Spinach was stored at room temperature under the light shielding condition, and collected after 9 days.

Table 5

| Example | Plant | Measured value (cm) | | Growth increase rate (%) |
|---|---|---|---|---|
| | | CoQ10 | Control | |
| Example 8 | Green onions | 3.02 | 2.53 | 19.4 |
| Example 9 | Chives | 2.90 | 2.37 | 22.4 |
| Example 10 | Snow peas | 29.31 | 25.03 | 17.1 |
| Example 11 | Buckwheat | 25.01 | 22.17 | 12.8 |
| Example 12 | Wheat | 14.16 | 9.79 | 44.6 |

(Example 13)

450 g of Low-humic andosols, ammonium sulfate and ammonium chloride as nitrogen components in the amount corresponding to 100 mg, 0.5 g of superphosphate of lime and 0.2 g of potassium chloride were mixed, then 1.2 g of water-solubilized coenzyme Q10 (Aqua Q10-P40 in a powder form manufactured by Nisshin Pharma Inc.) as water-solubilized ubiquinone was added thereto, and the mixture was further mixed. This mixture could be handled as is the case with the ordinary andosol, and could grow the plant in a pot.

The present invention can also be described as follows

(1) A carrier for plant cultivation characterized by containing ubiquinone as a growth-promoting agent.
(2) A method for growing plants characterized in that the liquid containing ubiquinone is sprayed or scattered to the plant body.
(3) A method for growing plants characterized in that plant seeds or seedlings including at least the root of the plant seedling are immersed in a liquid containing ubiquinone.
(4) Use of a liquid containing ubiquinone as a plant growth-promoting agent.

**Claims**

1. A plant growth-promoting agent containing ubiquinone as an active ingredient.

2. The plant growth-promoting agent according to claim 1, wherein ubiquinone is coenzyme Q9 and/or coenzyme Q10.

3. The plant growth-promoting agent according to claim 1 or 2, wherein the ubiquinone is a water-solubilized ubiquinone.

4. The plant growth-promoting agent according to claim 3, wherein the water-solubilized ubiquinone is contained in an amount of 0.00001 to 100% by mass based on the plant growth-promoting agent.

5. A fertilizer containing the plant growth-promoting agent according to any one of claims 1 to 4.

6. A germination promoting agent containing the plant growth-promoting agent according to any one of claims 1 to 4.

## INTERNATIONAL SEARCH REPORT

| | International application No. |
|---|---|
| | PCT/JP2008/059883 |

A. CLASSIFICATION OF SUBJECT MATTER
*A01N35/06*(2006.01)i, *A01P21/00*(2006.01)i, *C05F11/10*(2006.01)i

According to International Patent Classification (IPC) or to both national classification and IPC

B. FIELDS SEARCHED

Minimum documentation searched (classification system followed by classification symbols)
A01N35/06, A01P21/00, C05F11/10

Documentation searched other than minimum documentation to the extent that such documents are included in the fields searched
Jitsuyo Shinan Koho          1922-1996   Jitsuyo Shinan Toroku Koho   1996-2008
Kokai Jitsuyo Shinan Koho   1971-2008   Toroku Jitsuyo Shinan Koho   1994-2008

Electronic data base consulted during the international search (name of data base and, where practicable, search terms used)
JSTPlus(JDreamII)

C. DOCUMENTS CONSIDERED TO BE RELEVANT

| Category* | Citation of document, with indication, where appropriate, of the relevant passages | Relevant to claim No. |
|---|---|---|
| X | JP 50-99864 A  (Akiharu YAMASHITA), 07 August, 1975 (07.08.75), Claims; page 2, lower right column, lines 14 to 18; page 3, upper left column, lines 10 to 12; page 3, lower right column, line 17 to page 4, upper left column, line 5; examples 5, 8 (Family: none) | 1-6 |
| X Y | JP 51-12383 A  (Akiharu YAMASHITA), 30 January, 1976 (30.01.76), Claims; page 2, lower left column, line 14 to page 2, lower right column, line 8; page 3, upper left column, lines 8 to 12; examples 5, 9 (Family: none) | 1,2,6 3-5 |

| [X] Further documents are listed in the continuation of Box C. | [ ] See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 20 June, 2008 (20.06.08) | 01 July, 2008 (01.07.08) |

| Name and mailing address of the ISA/ Japanese Patent Office | Authorized officer |
|---|---|
| Facsimile No. | Telephone No. |

Form PCT/ISA/210 (second sheet) (April 2007)

**INTERNATIONAL SEARCH REPORT**

International application No.

PCT/JP2008/059883

C (Continuation).    DOCUMENTS CONSIDERED TO BE RELEVANT

| Category* | Citation of document, with indication, where appropriate, of the relevant passages | Relevant to claim No. |
|---|---|---|
| X<br>Y | WO 2004/095926 A2  (MONSANTO TECHNOLOGY,<br>L.L.C.),<br>11 November, 2004 (11.11.04),<br>Par. Nos. [00001], [00022], [00046], [00048],<br>[00057] to [00060], [00084]<br>& US 2004/0259732 A1 | 1-4,6<br>5 |

Form PCT/ISA/210 (continuation of second sheet) (April 2007)

REFERENCES CITED IN THE DESCRIPTION

**Patent documents cited in the description**

- JP HEI1171218 A
- JP SHO4813155 A
- JP SHO5099864 A
- JP HEI6305921 A
- JP 2004196781 A
- WO 2006035900 A
- JP 2003055203 A
- JP 2005139122 A
- WO 2006022187 A